# EUROPEAN PATENT APPLICATION

(11) **EP 4 241 729 A1**
(43) Date of publication of application: **13.09.2023**
(21) Application number: 21889577.9
(22) Date of filing: 04.11.2021
(51) Int. Cl.: A61C 8/00, A61C 13/265

(54) **DENTURE ATTACHMENT**

(30) Priority: 04.11.2020 KR 20200146063
(71) Applicant: Denflex Co., Ltd., Seoul 08381 (KR)
(72) Inventor: KIM, Hyung-Woo, Goyang-si Gyeonggi-do 10374 (KR)
(74) Representative: Lermer, Christoph
(86) International application number: PCT/KR2021/015876
(87) International publication number: WO 2022/098112

(57) **Abstract**

The present invention relates generally to a denture attachment. More particularly, the present invention relates to a denture attachment, wherein a user can detachably fasten a first fastening part coupled to a denture to a second fastening part placed on top of a natural tooth's root or implant fixture by a simple operation, and furthermore, even when occlusal force is continuously applied to the denture, the applied force can be buffered by an elastic rib structure of the attachment itself. Consequently, it is possible to extend not only lifespan of the attachment, but also lifespan of the implant fixture or natural tooth's root, and to provide superior performance with a significantly smaller volume than existing attachments, while providing excellent durability.

## Description

### Technical Field

The present invention relates generally to a denture attachment. More particularly, the present invention relates to a denture attachment, wherein a user can detachably fasten a first fastening part coupled to a denture to a second fastening part placed on top of a natural tooth's root or implant fixture by a simple operation, and furthermore, even when occlusal force is continuously applied to the denture, the applied force can be buffered by an elastic rib structure of the attachment itself. Consequently, it is possible to extend not only lifespan of the attachment, but also lifespan of the implant fixture or natural tooth's root, and to provide superior performance with a significantly smaller volume than existing attachments, while providing excellent durability. In addition, even when a plurality of implant fixtures implanted in the alveolar bone are severely inclined by an angle of placement of equal to or greater than 50°, the first fastening part can be fastened to the second fastening part without undergoing any interference or deformation.

### Background Art

Dentures are a type of a tooth replacement prosthetic for damaged permanent teeth, and are widely used because they have less economic burden than artificial dental implants. Dentures are removable devices that can be fitted to a user's gums. For example, dentures can be removed from the gums at night for cleaning or sleeping, and can be fitted to the gums during the day for eating or going out.

In general, retention of dentures is reinforced by denture attachments. In a conventional denture attachment, there is provided a structure in which a second fastening part placed on the top of a fixture implanted in an alveolar bone of a human body and a first fastening part embedded in the bottom of a denture are detachably coupled to each other. In this structure, generally, the second fastening part is made of metal, the first fastening part embedded in the bottom of the denture is configured with a polymer such as plastic or rubber ring placed in a narrow space in a metal housing, and the coupling of the first and second fastening parts is implemented by means of elastic force of a plastic or rubber ring.

However, in this conventional denture attachment, due to the fact that the second fastening part made of metal and placed on one side of the fixture, and the first fastening part in which an elastic body made of plastic or rubber is placed in the narrow space in the metal housing embedded in the bottom of the denture are detachably coupled to each other, there is a problem in that wear of the plastic or rubber may occur as the denture use time increases, and stress may be continuously applied to the attachment as the position of the denture continues to change due to occlusal forces in various directions applied to the denture, leading to a reduction in durability such as damage to the polymer e.g. plastic or rubber.

There is another problem in that as the denture use time increases, wearability and stability of the denture may be lowered, such as the denture not being firmly secured to the gum and shaking when the denture is worn, due to wear of the plastic or rubber ring in the metal housing of the first fastening part.

Furthermore, in the conventional denture attachment, due to the fact that the plastic or rubber of a very small size in the metal housing of the first fastening part has a material limitation in exerting a cushioning function that can be exerted within an elastic deformation limit, masticatory force generated when chewing food while wearing the denture may be transmitted directly from the denture to the fixture, and at this time, the masticatory force may be concentrated on the fixture, leading to a problem that the attachment or fixture may be deformed and damaged, and due thereto, frequent maintenance of the attachment may be required, leading to a problem of inconvenience and excessive maintenance costs.

In particular, in general, when the occlusal force is applied to the denture, a gum area which is in contact with the bottom of the denture may be contracted under pressure, and consequently, there often occurs a case in which the position of the denture placed on the gum may be also displaced toward the gum by the degree of contraction. As described above, when the occlusal force is continuously applied to the denture and the denture is continuously displaced toward the gum, there is a problem in that the masticatory force may intensively transmit excessive force to the attachment or the fixture, thereby shortening lifespan of the denture.

Therefore, there is a need for a denture attachment that allows the user to attach or detach a denture by simple operation, and that, even when masticatory or occlusal force is continuously applied to the denture, can buffer the transmitted force by structural features of the attachment itself.

Furthermore, the conventional attachment is a type that utilizes elasticity of a polymer by mounting a nonmetallic polymer such as plastic or rubber ring in the narrow space in the metal housing embedded in the bottom of the denture, and due to the limitation of the material, this type of attachment may be difficult to obtain sufficient elasticity and durability for mounting and dismounting of the denture and require more space to obtain more than a certain amount of elasticity and durability, and thus a metal housing with a larger volume may be required. In this case, however, when this metal housing is embedded in the bottom of the denture, in many cases, there is a problem in that the metal housing may protrude to the buccal or lingual side of the denture. Accordingly, there is a need for an attachment having as small a volume as possible while having sufficient elastic retention and durability.

Another problem of the conventional attachment is that when a plurality of fixtures is implanted in the alveolar bone, a corresponding part is placed on the top of each of the plurality of fixtures, and a plurality of fastening parts corresponding thereto is embedded in the bottom of the denture, i.e., when a plurality of attachments is used, if the fixtures implanted in the alveolar bone are not parallel but are inclined to each other by an angle of placement of equal to or greater than 20°, a straight-type corresponding part generally used may not be used as the corresponding part placed on the top of the fixture due to the limitation of the angle at which each attachment can be fastened, and thus it is cumbersome to compensate for a large difference in the angle of placement by using a special corresponding part called an angled abutment. Moreover, even if such a special corresponding part called an angled abutment is used, there is a problem in that it may be impossible to produce a variety of angled abutment for all angles to compensate for all angles of placement. Accordingly, there is a need for a denture attachment that can use a single corresponding part even if the fixtures differ greatly in the angle of placement.

In a hook coupling method as another conventional technique, the distance from a flange portion embedded in the bottom of a denture to the gum may be too short, and due thereto, with the use of a short hook protrusion formed by a simple straight incision toward the gum from the flange portion embedded in the bottom of the denture, it may be impossible to obtain sufficiently soft and proper elastic force, durability, and proper denture retention required for repeated mounting and dismounting of a denture. This may cause a denture attachment to rapidly lose elastic force in a short time due to repeated mounting and dismounting of the denture. Furthermore, due to occlusal force in various directions continuously applied to the denture while the denture is mounted in the oral cavity, a stress break function that elastically buffers the movement of the denture in all directions, including front and rear, left and right, cannot be exerted. Therefore, there is a problem in that the short hook protrusion may be highly likely to suffer permanent deformation, and that lifespan of a fixture may be shortened due to continuous impact of unbuffered occlusal force.

### Disclosure

### Technical Problem

Accordingly, the present invention has been made keeping in mind the above problems occurring in the related art, and an objective of the present invention is to provide a denture attachment, wherein a user can detachably fasten a first fastening part coupled to a denture to a second fastening part provided on top of a natural tooth's root or implant fixture by a simple operation, and furthermore, even when occlusal force is continuously applied to the denture, the applied force can be buffered by an elastic rib structure of the attachment itself, thereby making it possible to extend not only lifespan of the attachment, but also lifespan of the implant fixture or natural tooth's root.

Another objective of the present invention is to provide a denture attachment, wherein by configuring the attachment itself to have a buffer function by a plurality of elastic ribs having a helical shape, stress applied by occlusal force can be buffered and not concentrated on the attachment or implant fixture, and furthermore, stress caused by vertical and lateral pressure can be buffered.

Still another objective of the present disclosure is to provide a denture attachment, wherein when a plurality of implant fixtures implanted in the alveolar bone are severely inclined by an angle of placement of equal to or greater than 50°, a neck portion of a second fastening part is received in a fixture placement angle accommodating recess, thereby compensating for the angle of placement of the inclined fixtures. As a result, even when the angle of placement of the fixtures is equal to or greater than 50°, the first fastening part can be fastened to the second fastening part without undergoing any interference or deformation.

Still another objective of the present disclosure is to provide a denture attachment, wherein a first fastening part embedded in the bottom of a denture has an inclined surface extending from an outer diameter to an inner diameter thereof, so that even if a second fastening part is not placed in a correct position where it can be coupled to the first fastening part during the placement of the denture on the gum, the second fastening part is slid along the inclined surface extending from an outer diameter to an inner diameter of an opening of the first fastening part, thereby enabling natural coupling to the first fastening part.

### Technical Solution

In order to accomplish the above objective, according to one aspect of the present invention, there is provided a denture attachment that is used to reinforce retention of a denture placed into an oral cavity, the denture attachment including: a first fastening part coupled to the denture; and a second fastening part provided on top of a root of a natural tooth buried in an alveolar bone or top an implant fixture implanted in the alveolar bone, and coupled to the first fastening part, wherein at least one of the first fastening part and the second fastening part may include a plurality of elastic ribs having a helical shape that is formed in a predetermined section, and provided along an outer circumference thereof about an inner diameter central axis A, the respective unit elastic ribs may be configured such that one ends thereof are connected to each other and the other ends are separated from each other, and the other ends form elastic fastening portions deformed inwardly or outwardly with respect to the inner diameter central axis A upon application of external force and restored to an original shape thereof upon removal of elastic force, and by an elastic restoring action of the elastic ribs, the first fastening part and the second fastening part may be elastically coupled to or separated from each other.

### Advantageous Effects

According to the present invention, a user can detachably fasten a first fastening part coupled to a denture to a second fastening part placed on top of a natural tooth's root or implant fixture by a simple operation, and furthermore, even when occlusal force is continuously applied to the denture, the applied force can be buffered by an elastic rib structure of the attachment itself. Consequently, there is provided an effect of extending not only lifespan of an attachment, but also lifespan of the implant fixture or natural tooth's root. Furthermore, by configuring the attachment itself to have a buffer function by a plurality of elastic ribs having a helical shape, stress applied by occlusal force can be buffered and not concentrated on the attachment or implant fixture, and furthermore, stress caused by vertical and lateral pressure can be buffered and distributed uniformly.

Furthermore, according to the present invention, at least one of the second fastening part placed on one side of a fixture and the first fastening part embedded in the bottom of the denture includes elastic fastening portions comprised of a plurality of elastic ribs having a helical shape formed in a predetermined section, and an open end portion of the elastic ribs in which a helical shape is formed in the predetermined section has an elastic fastening force by elastic movement inwardly or outwardly with respect to the inner diameter center axis A of the elastic ribs, whereby it is possible to increase the length of the elastic ribs by at least equal to or greater than 2.5 times longer than when the elastic ribs are formed in a straight shape to have a fastening force, thereby greatly increasing the amount of elastic deformation without causing permanent deformation of the helical elastic ribs. Consequently, the attachment can have an increased elastic durability and can exhibit a soft detachable force. The attachment can also exert a stress break function that can allow a predetermined amount of denture movement in all directions, including front, rear, left, and right, which may occur when occlusal forces in various directions are applied to the denture, thereby providing an effect of extending lifespan of the fixture or attachment.

Furthermore, when a plurality of implant fixtures implanted in the alveolar bone are severely inclined by an angle of placement of equal to or greater than 50°, a neck portion of the second fastening part is received in a fixture placement angle accommodating recess, thereby compensating for the angle of placement of the inclined fixtures. As a result, even when the angle of placement of the fixtures is equal to or greater than 50°, the first fastening part can be fastened to the second fastening part without undergoing any interference or deformation.

Furthermore, the first fastening part embedded in the bottom of the denture has an inclined surface extending from the outer diameter to the inner diameter thereof, so that even if the second fastening part is not placed in a correct position where it can be coupled to the first fastening part during the placement of the denture on the gum, the second fastening part is slid along the inclined surface extending from the outer diameter to the inner diameter of an opening of the first fastening part, thereby enabling natural coupling to the first fastening part.

### Description of Drawings

FIG. 1 is an exploded perspective view illustrating a denture attachment according to an embodiment of the present invention.
FIG. 2 is an exploded sectional view illustrating the denture attachment according to the embodiment of the present invention.
FIG. 3 illustrates a perspective view illustrating an embodiment of a first fastening part of the present invention, and sectional views taken along lines A-A and B-B.
FIG. 4 is an assembled sectional view illustrating the denture attachment according to the embodiment of the present invention.
FIG. 5 is a sectional view illustrating a structure in which in the embodiment of the present invention, when the first fastening part is coupled to a second fastening part in a state in which the second fastening part is located off its vertical central axis, a neck portion of the second fastening part is received in a fixture placement angle accommodating recess of the first fastening part.
FIG. 6(a) is a perspective view illustrating another embodiment of a first fastening part according to the present invention, and FIG. 6(b) is a perspective view illustrating still another embodiment of a first fastening part according to the present invention.
FIG. 7 is a perspective view illustrating the structure of a second fastening part according to another embodiment of the present invention.
FIG. 8 is a sectional view illustrating the structure of the second fastening part according to the other embodiment of the present invention and the structure of the first fastening part coupled to the second fastening part.
FIG. 9 is a sectional view illustrating another embodiment of an elastic rib protection housing for protecting elastic ribs according to the embodiment of the present invention.
FIG. 10 illustrates a perspective view illustrating another embodiment of a first fastening part of the present invention, and sectional views taken along lines A-A and B-B.

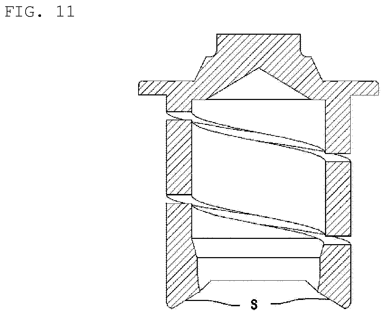

FIG. 11 is a sectional view illustrating an inclined surface(S) extending from an outer diameter to an inner diameter of an end portion of the first fastening part according to the embodiment of the present invention.

### Mode for Invention

Hereinafter, exemplary embodiments of the present invention will be described in more detail with reference to the accompanying drawings.

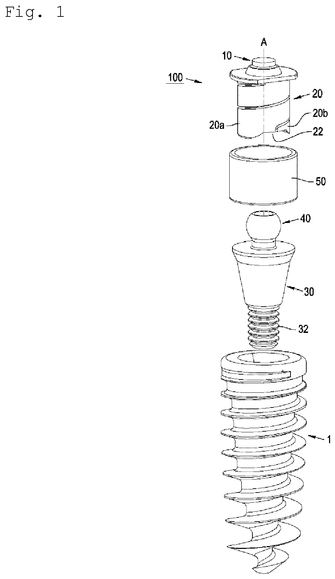

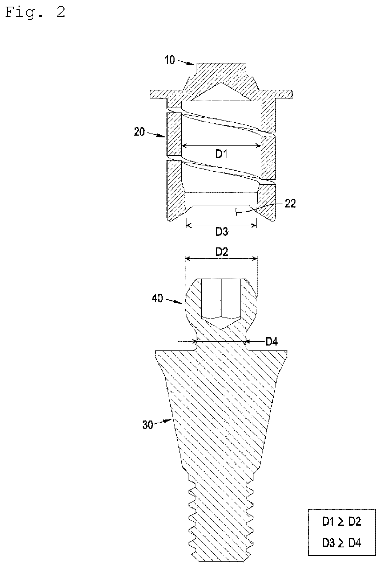

FIG. 1 is an exploded perspective view illustrating a denture attachment according to an embodiment of the present invention. FIG. 2 is an exploded sectional view illustrating the denture attachment according to the embodiment of the present invention.

First, an denture attachment 100 according to an embodiment of the present invention illustrated in FIGS. 1 and 2 is used to reinforce retention of a denture placed in an oral cavity, and includes: a base part 10 coupled to the bottom of the denture that comes into contact with a gum; a first fastening part 20 extending downwardly from the base part 10, and including a plurality of elastic ribs 20a and 20b protruding downwardly along an outer circumference thereof; and a second fastening part 40 provided on top of a root of a natural tooth buried in an alveolar bone or top of an implant fixture 1 implanted in the alveolar bone, and coupled to the first fastening part 20. Preferably, the base part 10 and the first fastening part 20 are coupled to the denture so as to be embedded in a denture body.

In FIGS. 1 and 2, it is illustrated that an abutment 30 provided with the second fastening part 40 is coupled to the top of the implant fixture 1. However, the second fastening part 40 may be provided on the top of the natural tooth's root or implant fixture by using various methods. Alternatively, the second fastening part 40 may be integrally formed with the implant fixture implanted in the alveolar bone.

The base part 10 and the second fastening part 40 are fixed to the bottom of the denture with an adhesive resin or the like. It would be apparent that the base part 10 may be manufactured in various shapes and forms, as long as being capable of functioning to be fixed to the denture.

As illustrated in FIGS. 1 and 2, the first fastening part 20 extends downwardly from the base part 10, and includes the plurality of elastic ribs 20a and 20b having a helical shape that is formed in a predetermined section, and protruding downwardly along the outer circumference of the first fastening part 20 with respect to the same inner diameter central axis A. Preferably, the respective unit elastic ribs 20a and 20b may be configured such that one ends thereof are connected to each other and the other ends are separated from each other, and the other ends may form elastic fastening portions deformed inwardly or outwardly with respect to the same inner diameter central axis A upon application of external force and restored to an original shape thereof upon removal of elastic force, and by an elastic restoring action of the elastic ribs, the first fastening part 20 and the second fastening part 40 can be elastically coupled to or separated from each other.

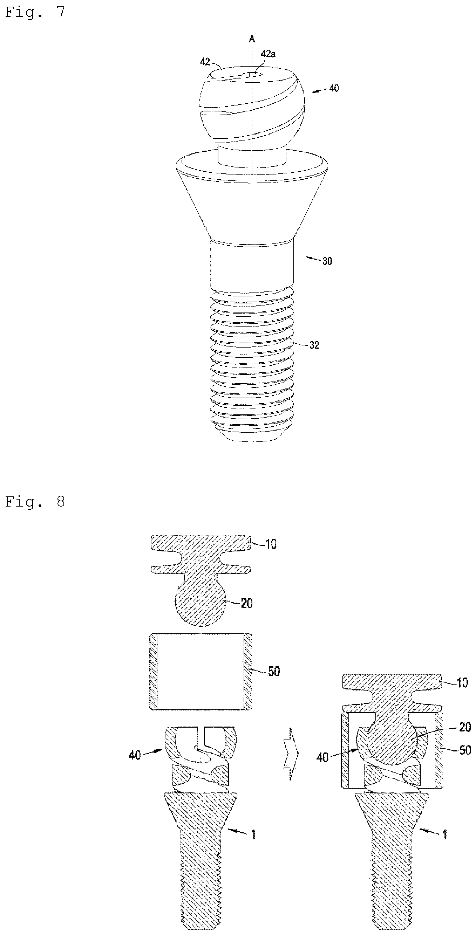

Meanwhile, as illustrated in FIG. 7, the second fastening part 40 may also include a plurality of elastic ribs having a helical shape and provided along an outer circumference thereof with respect to the same inner diameter central axis A. That is, at least one of the first fastening part 20 and the second fastening part 40 may include a plurality of elastic ribs having a helical shape that is formed in a predetermined section, and provided along the outer circumference thereof with respect to the same inner diameter central axis A.

Referring to FIG. 1, the abutment 30 is fastened to the top of the root of the natural tooth buried in the alveolar bone or the top of the implant fixture 1 implanted in the alveolar bone, with an upper portion provided with the second fastening part 40 detachably coupled to the first fastening part 20. That is, threads 32 of the abutment 30 are screwed and fixed into an axial hole of the implant fixture 1.

Referring to FIG. 2, the abutment 30 is screwed to the implant fixture 1, the second fastening part 40 protruding from the upper portion of the abutment 30 is fastened into a first fastening hole, i.e., a fastening space that is defined in the plurality of elastic ribs 20a and 20b by being surrounded thereby. That is, a user may place the first fastening part 20, extending from the base part 10 fixed to the denture by the adhesive resin, correspondingly onto the top of the second fastening part 40, and in this state, the user may simply press the entire denture downwardly to cause the first fastening part 20 to be fastened to the second fastening part 40, whereby the denture can be efficiently mounted on the gum with a clicking sound. Here, when the first fastening part 20 comprised of the plurality of elastic ribs 20a and 20b is fastened to the second fastening part 40, the plurality of elastic ribs 20a and 20b is elastically fastened to the second fastening part 40 by the elastic restoring action by which the elastic ribs 20a and 20b are deformed outwardly or inwardly with respect to the same inner diameter central axis A and then restored to an original shape thereof upon completion of fastening. In some cases, the second fastening part 40 may be integrally formed with the implant fixture 1.

Referring to FIG. 1, due to the fact that the first fastening part 20 is comprised of the plurality of elastic ribs 20a and 20b each of which has a helical shape formed over the predetermined section, the plurality of elastic ribs 20a and 20b having such a helical shape itself has a buffer function so as to buffer stress applied by occlusal force, as well as to disperse stress caused by vertical and lateral pressure.

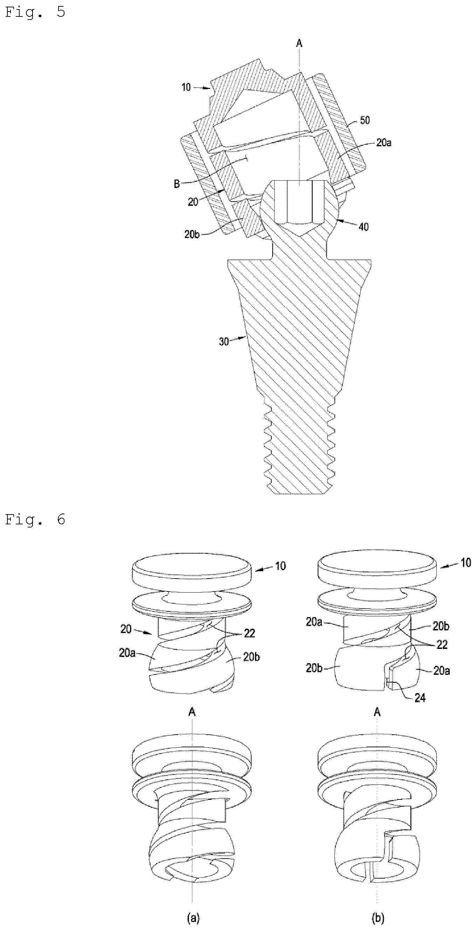

FIG. 6(a) is a perspective view illustrating an embodiment of a first fastening part according to the present invention, and FIG. 6(b) is a perspective view illustrating another embodiment of a first fastening part according to the present invention.

As illustrated in FIG. 6(a), a plurality of elastic ribs 20a and 20b may have a helical shape over the entire section including a lower end of the first fastening part. Alternatively, as illustrated in FIG. 6(b), a plurality of elastic ribs 20a and 20b may be configured such that a helical shape is formed in a predetermined section and a straight shape is formed at an end portion. In this case, a helical gap 22 is formed between upper neighboring elastic ribs 20a and 20b, and a vertical gap 24 is formed in a predetermined section of the end portion. As such, the reason why the vertical gap 24 is formed in the end portion which is open is to secure sufficient mechanical strength of the elastic ribs 20a and 20b. This takes into account that if the elastic ribs 20a and 20b have a helical shape formed from the base part 10 to the lower end of the first fastening part 20 as illustrated in FIG. 6(a), particularly the mechanical strength of the edge of an open portion may be lowered. However, it should be construed that the present invention include all structures in which the plurality of elastic ribs 20a and 20b may have a helical shape in at least a predetermined section of the first fastening part 20.

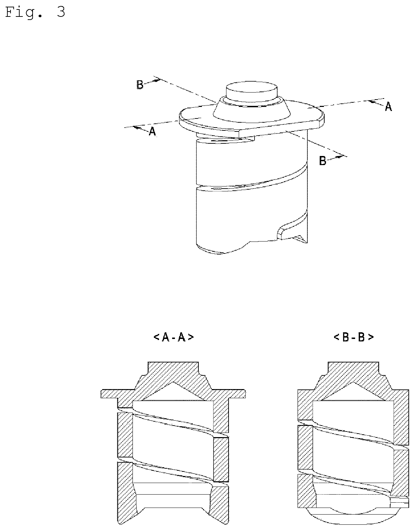

Referring to FIGS. 1 and 3, at least one fixture placement angle accommodating recess 22 is recessed in a predetermined section of an end portion of the first fastening part 20 defined by the other separated ends of the elastic ribs 20a and 20b.

When a plurality of implant fixtures implanted in the alveolar bone are severely inclined by an angle of placement of equal to or greater than 50°, as illustrated in FIG. 5, a neck portion 42 of the second fastening part 40 is received in the fixture placement angle accommodating recess 22, thereby compensating for the angle of placement of the inclined fixtures. As a result, even when the angle of placement of the fixtures is equal to or greater than 50°, the first fastening part 20 can be fastened to the second fastening part 40 without undergoing any interference or deformation.

Referring to FIG. 5, the fixture placement angle accommodating recess 22 is recessed in the predetermined section of the end portion of the first fastening part 20 defined by the other separated ends of the elastic ribs 20a and 20b, the end portion corresponding to an opening through which the second fastening part 40 enters into the first fastening part 20. This is to minimize deformation of the elastic ribs 20a and 20b of the first fastening part 20 caused by the second fastening part 40 when the denture is placed in the oral cavity and then moved in the direction of the gum by occlusal force, the denture in which the first fastening part 20 coupled to the second fastening part 40 that is fastened to each implant fixture placed at a severe angle is embedded.

Preferably, as illustrated in FIG. 2, a width D3 of the fixture placement angle accommodating recess 22 is equal to or greater than a maximum outer diameter D4 of the neck portion 42 of the second fastening part 40. As a result, when the first fastening part 20 is coupled to the second fastening part 40 in a state in which the second fastening part 40 is located off its vertical central axis, the neck portion 42 of the second fastening part 40 is received in the fixture placement angle accommodating recess 22, so that the fixture placement angle accommodating recess 22 of the first fastening part 20 is located closest to an outer lower surface of the neck portion 42 of the second fastening part 20.

Referring to FIG. 1, the present invention may further include an elastic rib protective housing 50 provided on an outer peripheral surface of the plurality of elastic ribs 20a and 20b. The elastic rib protective housing 50 is to prevent the adhesive resin or the like used to fix the base part 10 to the bottom of the denture from penetrating between the elastic ribs 20a and 20b of the first fastening part 20. The elastic rib protective housing 50 may be provided integrally with the base part 10. Alternatively, the elastic rib protective housing 50 may be manufactured in a detachable form so that the elastic rib protective housing 50 can be removed after the operation of fixing the base part 10 is completed. Preferably, the elastic rib protective housing 50 may be manufactured to have a gap that is defined between an inner surface of the elastic rib protective housing 50 and an outer surface of the first fastening part 20 by a space for allowing deformation so that when the first fastening part 20 is fastened to the second fastening part 40 or when occlusal force is applied to the denture, a space in which the elastic ribs 20a and 20b can be deformed in the elastic rib protective housing 50.

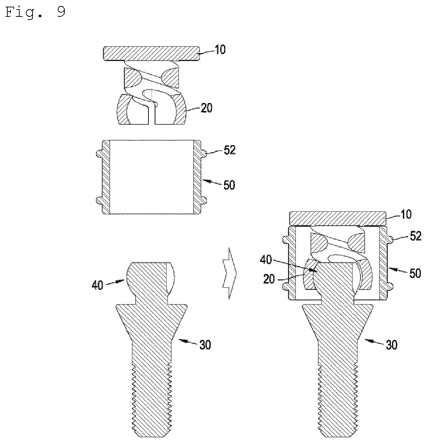

According to another embodiment of the present invention, as illustrated in FIG. 9, an uneven portion 52 may be further provided on an outer circumferential surface of the elastic rib protective housing 50. This is to ensure that when both the base part 10 and the elastic rib protective housing 50 are embedded into the denture by resin or the like, the uneven portion 52 is combined with the resin, thereby securing robustness and durability. Preferably, the elastic rib protective housing 50 may have corrugations formed circumferentially so that the elastic rib protective housing 50 can be collapsed and shortened in a predetermined section in a vertical length direction. In some cases, the elastic rib protective housing 50 may be made of a synthetic resin material such as a polymer to facilitate a corrugation process.

According to another embodiment of the present invention, as illustrated in FIGS. 6(a), 6(b), and 7, there may be provided a structure in which a first fastening part 20 is fastened to a second fastening part 40 comprised of a plurality of elastic ribs. In this case, when the first fastening part 20 is fitted into and fastened to the second fastening part 40, the plurality of elastic ribs is elastically fastened to the first fastening part 20 by an elastic restoring action by which the elastic ribs are deformed outwardly with respect to the central axis A and then restored to an original shape thereof upon completion of fastening.

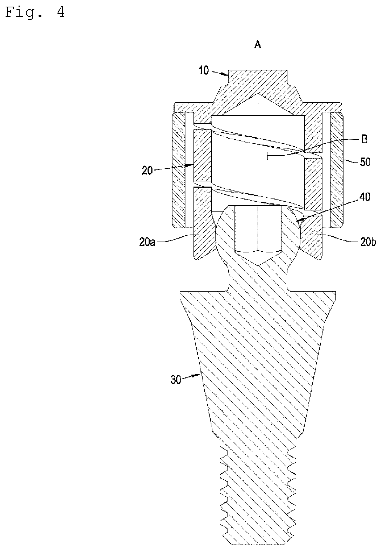

Referring to FIG. 4, when the first fastening part 20 and the second fastening part 40 are fastened together, a "space B for accommodating vertical position changes of the denture" may be formed between a lower plane of the axial hole of the first fastening part 20, the axial hole being defined in the plurality of elastic ribs 20a and 20b by being surrounded thereby, and an upper end of the second fastening part 40. Preferably, the vertical height of the space B may be at least equal to or greater than 0.6 mm. More preferably, an elastic body such as a spring or a rubber material is further provided in the space B. Most preferably, an inner diameter D1 of the space B is equal to or greater than a maximum outer diameter D2 of a fastened portion of the second fastening part 40. This is to allow the second fastening part 40 to easily enter into the space B without interference of its edge when a vertical position of the denture is changed as the gum in contact with the bottom of the denture is pressurized by occlusal force.

When occlusal force is applied to the denture and the gum in contact with the bottom of the denture is pressurized thereby, causing a change in vertical position of the denture, the first fastening part (i.e., the plurality of elastic ribs) surrounding the second fastening part 40 is deformed outwardly, causing the second fastening part 40 to be moved to the "space B for accommodating vertical position changes of the denture". Subsequently, when the occlusal force is removed and the pressurized gum is restored thereby, the first fastening part 20 is restored to an original position thereof, whereby the second fastening part 40 can be elastically restored in the axial hole of the first fastening part 20 to a vertical position before application of the occlusal force.

In this case, the elastic restoration of the position of the denture can be further facilitated by the elastic body such as a spring or a rubber material provided in the space B.

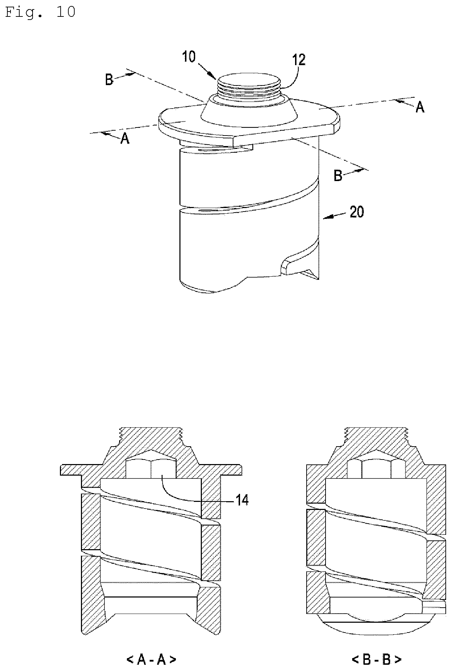

According to another embodiment of the present invention, as illustrated in FIG. 10, a screw part 12 for coupling with the denture body may be formed on an upper surface of the base part 10. In this case, a coupling groove (not illustrated) is formed in the denture body at a position corresponding to the screw part 12. In addition, a polygonal recess 14 is formed in an inner lower surface of the base part 10 corresponding to the screw part 12. This is to enable an operator to rotate and insert a screwdriver or the like into the polygonal recess 14 when it is necessary to couple the attachment to the denture body or to replace the attachment.

As such, when the attachment is coupled to the denture through the screw part 12, the attachment can be easily fixed to the denture without requiring the provision of an adhesive resin. In particular, even if the attachment is broken or damaged during use after the procedure and needs to be replaced, the attachment can be easily removed and replaced with a new attachment using a screwdriver.

While the specific embodiments of the invention have been described above in detail with reference to the drawings, the present invention should not be limited to specific structures of the embodiments. Those skilled in the art will appreciate that various modifications, additions and substitutions are possible, without departing from the scope and spirit of the invention as disclosed in the accompanying claims. However, all of the simply modified or changed structures may be clearly included within the scope of rights of the present invention.

## Claims

1. A denture attachment that is used to reinforce retention of a denture placed into an oral cavity, the denture attachment comprising:
a first fastening part coupled to the denture; and
a second fastening part provided on top of a root of a natural tooth buried in an alveolar bone or top an implant fixture implanted in the alveolar bone, and coupled to the first fastening part,
wherein at least one of the first fastening part and the second fastening part includes a plurality of elastic ribs having a helical shape that is formed in a predetermined section, and provided along an outer circumference thereof about an inner diameter central axis (A),
the respective unit elastic ribs are configured such that one ends thereof are connected to each other and the other ends are separated from each other, and the other ends form elastic fastening portions deformed inwardly or outwardly with respect to the inner diameter central axis (A) upon application of external force and restored to an original shape thereof upon removal of elastic force, and
by an elastic restoring action of the elastic ribs, the first fastening part and the second fastening part can be elastically coupled to or separated from each other.

2. The denture attachment of claim 1, wherein the plurality of elastic ribs is configured such that the helical shape is formed in the predetermined section and a straight shape is formed at an end portion.

3. The denture attachment of claim 2, wherein an inner diameter (D1) of a space (B) for accommodating vertical position changes of the denture is equal to or greater than a maximum outer diameter (D1) of a fastened portion of the second fastening part.

4. The denture attachment of claim 2, wherein an elastic body capable of elastic deformation, such as a spring or a rubber material, is further provided in a space for accommodating vertical position changes of the denture.

5. The denture attachment of claim 1, wherein at least one fixture placement angle accommodating recess is recessed in a predetermined section of an end portion of the first fastening part defined by the other separated ends of the elastic ribs.

6. The denture attachment of claim 1, wherein the first fastening part has an inclined surface extending from an outer diameter to an inner diameter of an end portion of thereof.

7. The denture attachment of claim 5, wherein a width (D3) of the fixture placement angle accommodating recess is equal to or greater than a maximum outer diameter (D4) of a neck portion of the second fastening part.

8. The denture attachment of claim 1, further comprising an elastic rib protective housing provided on an outer peripheral surface of the plurality of elastic ribs having the helical shape.

9. The denture attachment of claim 1, wherein an inner diameter formed by the end portion of the plurality of elastic ribs having the helical shape is less than a maximum outer diameter of a part that is fastened correspondingly to the end portion.

10. The denture attachment of claim 1, further comprising a base part formed on an upper surface of the first fastening part,
wherein a screw part for coupling with a denture body is formed on an upper surface of the base part, and a polygonal recess for allowing a screwdriver to be rotated and inserted thereinto is formed in an inner lower surface of the base part corresponding to the screw part.
